# EUROPEAN PATENT SPECIFICATION

(11) **EP 3 877 134 B1**
(45) Date of publication and mention of the grant of the patent: **16.03.2022**
(21) Application number: 19797734.1
(22) Date of filing: 05.11.2019
(51) Int. Cl.: B29C 45/00, F16K 37/00, G05G 1/10

(54) **CAP FOR A HANDWHEEL**
DECKEL FÜR EIN HANDRAD
COUVERCLE POUR UNE ROUE À MAIN

(30) Priority: 06.11.2018 LU 100977
(43) Date of publication of application: 15.09.2021
(73) Proprietor: ROTAREX S.A., 7440 Lintgen (LU)
(72) Inventor: EROGLU, Volkan, 2353 Luxembourg (LU); SCHMITZ, Jean-Claude, 7340 Heisdorf (LU)
(74) Representative: Lecomte & Partners
(86) International application number: PCT/EP2019/080272
(87) International publication number: WO 2020/094660

(56) References cited:
- EP-A1- 1 248 177
- US-A- 4 094 210
- US-A- 4 766 642
- US-A- 5 769 118
- US-A- 6 112 619

## Description

### Technical field

The invention is directed to manual valves, in particular to handwheels of manual valves.

### Background art

Valves are often found in flow systems, especially for the course of liquids or gas. They can also be found on a gas bottle or cylinder, to regulate the gas outlet. For opening or closing a valve, it is generally known to use a handwheel, positioned on a rotating axle of said valve. It is also known to use a cap which partially covers the handwheel, in particular to facilitate the recognition or the use of the handwheel, e.g. the rotation direction for opening/closing the valve.

Prior art patent document published US 5,469,758 discloses a handwheel with an inner core and a partial outer covering made of soft and resilient plastic. The covering comprises, on its inner face, ribs which are moulded in cavities provided in the handwheel inner core. This system enables the fixation of the covering on the handwheel inner core. But this system is complex in shape and manufacturing, and the covering cannot be easily replaced.

Prior art patent documents published US 4,766,642, EP 1 248 177 A1 and US 6,112,619 disclose each a handwheel for a valve, according to the preamble of claim 1, and a cap for being positioned on a core of a valve, according to the preamble of claim 15. US 4,094,210 discloses a handwheel with a corrugated outer profile and snap hooks to be anchored onto a adapter plate.

### Summary of invention

### Technical Problem

The invention has for technical problem to provide a cap for a handwheel which can be easily mounted on the underlying handwheel core.

### Technical solution

The invention is directed to a handwheel for a valve, comprising: a core for being fastened to a rotating axle of the valve; and a cap positioned on the core; remarkable in that the cap comprises a cover wall on an upper face of the core, and projections extending axially from the cover wall into holes of the core, said projections being configured for being inserted axially into said holes and thereby fastening the cap to said core, wherein the core and the cover wall show a corrugated outer profile forming bosses, the holes and the projections being arranged on said bosses.

Advantageously, the cover wall covers at least 95% of the upper face of the core.

Advantageously, the cover wall extends only over the upper face of the core, i.e. does not extend over a side wall of the core.

According to a preferred embodiment, each of the projections shows a constant cross-section.

According to a preferred embodiment, each of the projections is cylindrical.

According to a preferred embodiment, each of the projections shows a distal end with a cross-section that corresponds to an average cross-section of said projection.

According to a preferred embodiment, each of the projections shows an outer diameter of at least 4mm and at most 8mm.

According to a preferred embodiment, each of the projections shows a through-hole.

According to a preferred embodiment, each through-hole shows a diameter of at least 2mm and/or at most 6mm.

According to a preferred embodiment, the holes and the projections are distributed at the periphery of the core and cover wall.

According to a preferred embodiment, the number of bosses is at least 4 and/or at most 6.

According to a preferred embodiment, the cover wall comprises a frusto-conical annular portion and a central flat portion, said frusto-conical annular portion resting on a corresponding frusto-conical annular portion of the core.

According to a preferred embodiment, the projections extend from the frusto-conical annular portion of the cover wall.

According to a preferred embodiment, the central flat portion of the cover wall is raised relative to the core.

According to a preferred embodiment, the projections are press-fitted in the holes.

According to a preferred embodiment, the projections extend distally beyond the holes.

According to a preferred embodiment, the cover wall comprises at a periphery of said wall a slot configured for facilitating insertion of a screwdriver between said wall and the core for removing the cap.

Advantageously, the cap comprises a flap positioned near the slot on a lower face of said cap, the flap being able to be inserted in a corresponding hole positioned on the frustro-conical annular portion of the handwheel core. Furthermore, the handwheel core may comprise stiffening grooves on its lower face, projecting from a central opening receiving the rotating axle of the valve, to the edge of the core.

Advantageously, the cap is a unitary piece made of plastic, e.g. thermoplastic.

The invention is also directed to a cap for being positioned on a core configured for being fastened to a rotating axle of a valve, remarkable in that the cap comprises a cover wall for resting on an upper face of the core, and projections extending axially from the cover wall, said projections being configured for being inserted axially into holes of the core and thereby fastening the cap to said core, wherein the cover wall shows a corrugated outer profile forming bosses, the projections being arranged on said bosses.

The features of the cap disclosed above in connection with the handwheel are also disclosed for the cap as such, as defined here above.

### Advantages of the invention

The invention is particularly interesting in that it provides a cap for a handwheel which can be easily mounted on the underlying handwheel core. The use of projections to fasten the cap on the handwheel core make it easier to install. The through-hole, which can be found in each projection, may be used for receiving a tamperproof wire attached to a fixed portion of the valve body or the gas cylinder. Furthermore, the invention allows for more grip for using the handwheel, by using plastic, by the presence of bosses on its outer profile and because of the presence of a frusto-conical portion near the bosses. The fact that the cap covers the whole upper face of the handwheel helps for a more comfortable grip or operation of said handwheel. Furthermore, the use of plastic limits changes in temperatures, in particular to high degrees or to low degrees, which may render the use of the handwheel impractical. The presence of a slot on the periphery of the cap enables the insertion of a screwdriver, so as to facilitate the removing of the cap. The presence of writings and the presence of the flap on the cap allows a better use of the handwheel, by limiting the risk of errors such as a bad positioning of the cap on the handwheel core. The presence of stiffening grooves under the handwheel render it more solid, so that it is less likely to break while using it. So, the invention is easy to install and to use, and it doesn't cost a lot to produce. The use of material well known in the art render it easy to manufacture.

### Brief description of the drawings

Figure 1 shows a perspective view of the upper side of a handwheel cap;
Figure 2 shows a perspective view of the underside of the handwheel cap shown in figure 1;
Figure 3 shows a view of the upper side of the handwheel core according to the invention;
Figure 4 shows a perspective view of the upper side of the handwheel core mounted with the handwheel cap;
Figure 5 shows a perspective view of the underside of the handwheel core mounted with the handwheel cap, as shown in figure 4;
Figure 6 show a section made on a bosses of the handwheel, as shown in figures 4 and 5.

### Description of two embodiments

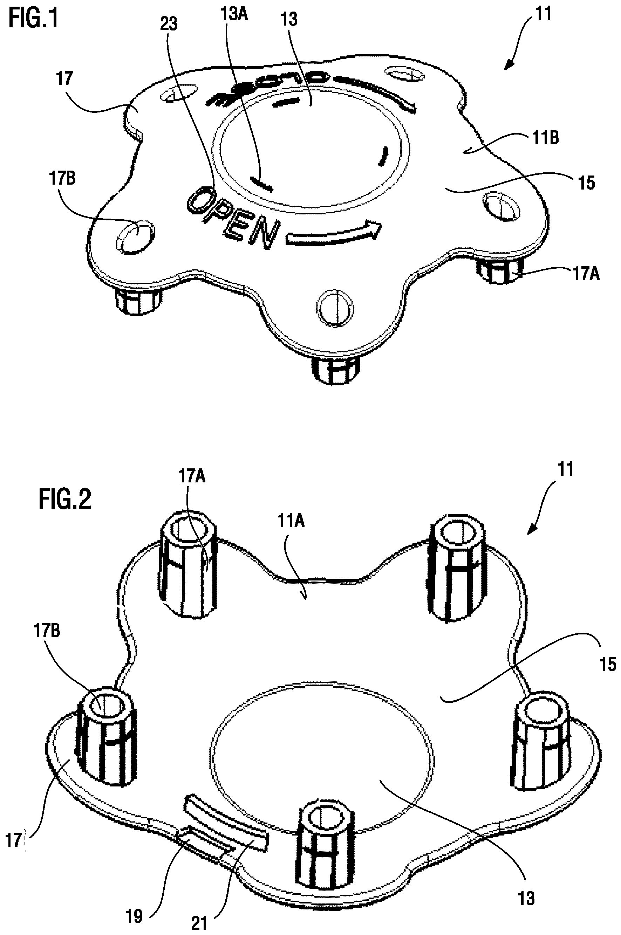

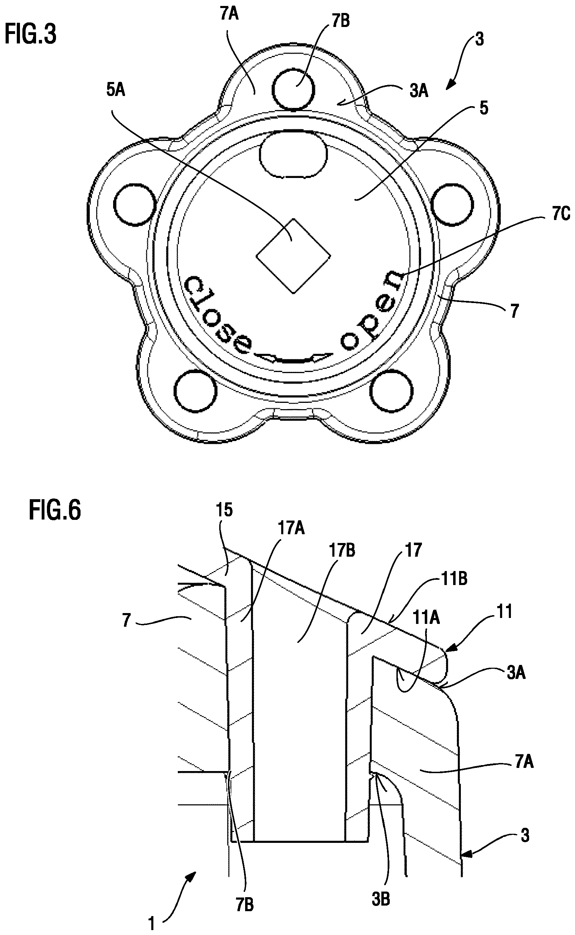

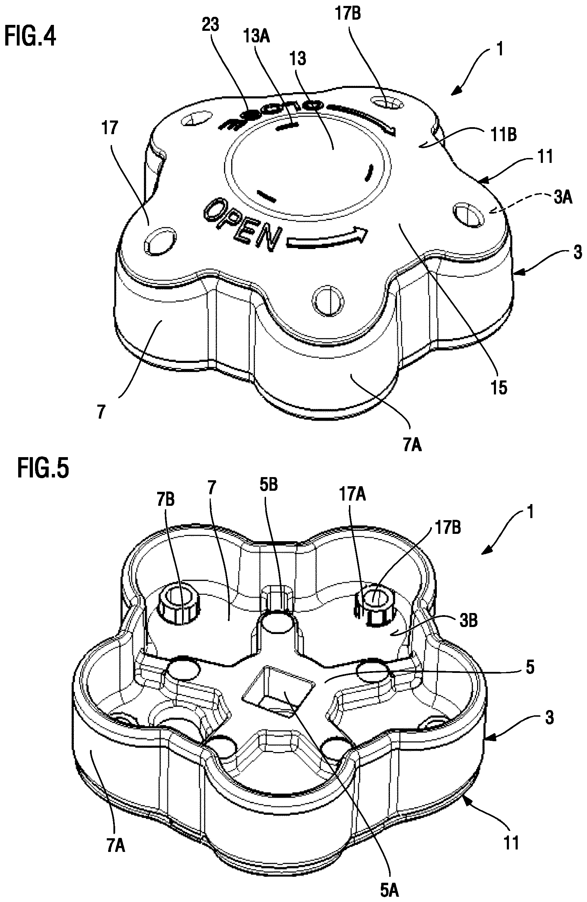

Figures 1 and 2 shows a handwheel cap for a valve. The handwheel cap 11 comprises a cover wall, made of a central flat portion 13 and a frusto-conical annular portion 15. The central portion 13 is raised compared to the frusto-conical portion 15, and comprises three extensions 13A, which may facilitate the grip of the handwheel (shown in figures 4 and 5). The frusto-conical portion 15 show a corrugated outer profile forming bosses 17, the number of the bosses 17 being preferably comprised between 4 and 6. On an upper face 11B of the cap 11 there is also writings or indicia 23, which may help for determining the rotation direction of the handwheel, for opening or closing it. The cap 11 further comprises, on its lower face 11A, a number of projections 17A which extend axially from said cap 11. Each projection 17A shows a constant cross-section, and is preferentially cylindrical. The distal end of each projection 17A has a cross-section that correspond to an average cross-section of said projection 17A. Furthermore, each projection 17A shows an outer diameter of at least 4mm and at most 8mm, and a through-hole 17B which has a diameter of at least 2mm and or at most 6mm. The projections 17A are preferably distributed at the periphery of the cap 11, in its frusto-conical portion 15, and more preferably on each bosses 17. The cap 11 further comprises, on its lower face 11A and at the periphery of said cap 11, a slot 19 and a flap 21, which will be further detailed in figures 3 and 4.

Figure 3 shows an upper face of the handwheel core according to the invention. The upper face 3A of the handwheel core 3 comprises a central flat portion 5 and a frusto-conical annular portion 7, the central portion 5 being lower than the frusto-conical portion 7. The frusto-conical portion 7 comprises bosses 7A, the number of the bosses 7A being preferably comprised between 4 and 6, each bosses 7A comprising an hole 7B. The central flat portion 5 further comprises a central opening 5A which can receive the rotating axle for opening or closing the valve, and writings and/or indicia 7C, which may describe the way to open or close the valve.

Figures 4, 5 and 6 show the handwheel cap mounted on the core of said handwheel and a section of part of the handwheel. The cap 11 is positioned on the upper face 3A of the core 3, and serve to facilitate the grip and the use of the handwheel 1. The frusto-conical portion 15 of the cap 11 is resting on the frusto-conical portion 7 of the core 3. The central portion 13 of the cap 11 is raised compared to the central flat portion 5 of the core 3. As such, the cap 11 covers the whole upper face 3A of the core 3. Each projection 17A of the cap 11 is being configured for being inserted axially into each hole 7B of the underlying core 3, thereby fastening the cap 11 to the core 3. Each projection 17A is press-fitted into each hole 7B. Furthermore, each projection 17A extend distally beyond the hole 7B. The handwheel core 3 comprises a lower face 3B, said lower face 3B presenting stiffening grooves 5B, which extend from the central opening 5A to a flat portion between each bosses 7A. The slot of the cap 11, initially described in figures 1 and 2, serves to facilitate the insertion of a screwdriver between the cap 11 and the core 3, in order to remove said cap 11. The flap serves to the good positioning of the cap 11 on the handwheel upper face 3A.

## Claims

1. Handwheel (1) for a valve, comprising:
- a core (3) for being fastened to a rotating axle of the valve; and
- a cap (11) positioned on the core (3);
wherein the cap (11) comprises a cover wall on an upper face (3A) of the core (3), and projections (17A) extending axially from the cover wall into holes (7B) of the core (3), said projections (17A) being configured for being inserted axially into said holes (7B) and thereby fastening the cap (11) to said core (3); **characterized in that**
the core (3) and the cover wall show a corrugated outer profile forming bosses (7A, 17), the holes (7B) and the projections (17A) being arranged on said bosses (7A, 17).

2. Handwheel (1) according to claim 1, wherein each of the projections (17A) shows a constant cross-section.

3. Handwheel (1) according to one of claims 1 and 2, wherein each of the projections (17A) is cylindrical.

4. Handwheel (1) according to any one of claims 1 to 3, wherein each of the projections (17A) shows a distal end with a cross-section that corresponds to an average cross-section of said projection (17A).

5. Handwheel (1) according to any one of claims 1 to 4, wherein each of the projections (17A) shows an outer diameter of at least 4mm and at most 8mm.

6. Handwheel (1) according to any one of claims 1 to 5, wherein each of the projections (17A) shows a through-hole (17B), preferably wherein each through-hole (17B) shows a diameter of at least 2mm and/or at most 6mm.

7. Handwheel (1) according to any one of claims 1 to 6, wherein the holes (7B) and the projections (17A) are distributed at the periphery of the core (3) and cover wall.

8. Handwheel (1) according to any one of claims 1 to 7, wherein the number of bosses (7A, 17) is at least 4 and/or at most 6.

9. Handwheel (1) according to any one of claims 1 to 8, wherein the cover wall comprises a frusto-conical annular portion (15) and a central flat portion (13), said frusto-conical annular portion (15) resting on a corresponding frusto-conical annular portion (7) of the core (3).

10. Handwheel (1) according to claim 9, wherein the projections (17A) extend from the frusto-conical annular portion (15) of the cover wall.

11. Handwheel (1) according to one of claims 9 and 10, wherein the central flat portion (13) of the cover wall is raised relative to the core (3).

12. Handwheel (1) according to any one of claims 1 to 11, wherein the projections (17A) are press-fitted in the holes (7B).

13. Handwheel (1) according to any one of claims 1 to 12, wherein the projections (17A) extend distally beyond the holes (7B).

14. Handwheel (1) according to any one of claims 1 to 13, wherein the cover wall comprises at a periphery of said wall a slot (19) configured for facilitating insertion of a screwdriver between said wall and the core (3) for removing the cap (11).

15. Cap (11) for being positioned on a core (3) configured for being fastened to a rotating axle of a valve, wherein the cap (11) comprises a cover wall for resting on an upper face (3A) of the core (3), and projections (17A) extending axially from the cover wall, said projections (17A) being configured for being inserted axially into holes (7B) of the core (3) and thereby fastening the cap (11) to said core (3); **characterized in that** the cover wall shows a corrugated outer profile forming bosses (17), the projections (17A) being arranged on said bosses (17).

## Patentansprüche

1. Handrad (1) für ein Ventil, umfassend:
- einen Kern (3) zur Befestigung an einer Drehachse des Ventils; und
- eine Kappe (11), die auf dem Kern (3) positioniert ist;
wobei die Kappe (11) eine Abdeckwand auf einer Oberseite (3A) des Kerns (3) und Vorsprünge (17A) umfasst, die sich axial von der Abdeckwand in Löcher (7B) des Kerns (3) erstrecken, wobei die Vorsprünge (17A) so gestaltet sind, dass sie axial in die Löcher (7B) eingeführt werden und dadurch die Kappe (11) am Kern (3) befestigen; **dadurch gekennzeichnet,**
**dass** der Kern (3) und die Abdeckwand ein gewelltes Außenprofil aufweisen, das Ansätze (7A, 17) bildet, wobei die Löcher (7B) und die Vorsprünge (17A) auf den Ansätzen (7A, 17) angeordnet sind.

2. Handrad (1) nach Anspruch 1, wobei jeder der Vorsprünge (17A) einen gleichmäßigen Querschnitt aufweist.

3. Handrad (1) nach einem der Ansprüche 1 und 2, bei dem jeder der Vorsprünge (17A) zylindrisch ist.

4. Handrad (1) nach einem der Ansprüche 1 bis 3, wobei jeder der Vorsprünge (17A) ein distales Ende mit einem Querschnitt aufweist, der einem mittleren Querschnitt des Vorsprungs (17A) entspricht.

5. Handrad (1) nach einem der Ansprüche 1 bis 4, wobei jeder der Vorsprünge (17A) einen Außendurchmesser von mindestens 4 mm und höchstens 8 mm aufweist.

6. Handrad (1) nach einem der Ansprüche 1 bis 5, wobei jeder der Vorsprünge (17A) ein Durchgangsloch (17B) aufweist, vorzugsweise wobei jedes Durchgangsloch (17B) einen Durchmesser von mindestens 2 mm und/oder höchstens 6 mm aufweist.

7. Handrad (1) nach einem der Ansprüche 1 bis 6, wobei die Löcher (7B) und die Vorsprünge (17A) am Umfang des Kerns (3) und der Abdeckwand verteilt sind.

8. Handrad (1) nach einem der Ansprüche 1 bis 7, wobei die Anzahl der Ansätze (7A, 17) mindestens 4 und/oder höchstens 6 beträgt.

9. Handrad (1) nach einem der Ansprüche 1 bis 8, wobei die Abdeckwand einen kegelstumpfförmigen ringförmigen Abschnitt (15) und einen zentralen flachen Abschnitt (13) aufweist, wobei der kegelstumpfförmige ringförmige Abschnitt (15) auf einem entsprechenden kegelstumpfförmigen ringförmigen Abschnitt (7) des Kerns (3) aufliegt.

10. Handrad (1) nach Anspruch 9, wobei sich die Vorsprünge (17A) von dem kegelstumpfförmigen ringförmigen Abschnitt (15) der Abdeckwand erstrecken.

11. Handrad (1) nach einem der Ansprüche 9 und 10, wobei der zentrale flache Abschnitt (13) der Abdeckwand gegenüber dem Kern (3) erhöht ist.

12. Handrad (1) nach einem der Ansprüche 1 bis 11, wobei die Vorsprünge (17A) in die Löcher (7B) eingepreßt sind.

13. Handrad (1) nach einem der Ansprüche 1 bis 12, wobei sich die Vorsprünge (17A) in distaler Richtung über die Löcher (7B) hinaus erstrecken.

14. Handrad (1) nach einem der Ansprüche 1 bis 13, wobei die Abdeckwand an einem Umfang der Wand einen Schlitz (19) aufweist, der so gestaltet ist, dass er das Einführen eines Schraubendrehers zwischen der Wand und dem Kern (3) zum Entfernen der Kappe (11) erleichtert.

15. Kappe (11) zur Positionierung auf einem Kern (3), der zur Befestigung an einer Drehachse eines Ventils konfiguriert ist, wobei die Kappe (11) eine Abdeckwand zur Auflage auf einer oberen Fläche (3A) des Kerns (3) und Vorsprünge (17A) umfasst, die sich axial von der Abdeckwand erstrecken, wobei die Vorsprünge (17A) so konfiguriert sind, dass sie axial in Löcher (7B) des Kerns (3) eingeführt werden und dadurch die Kappe (11) an dem Kern (3) befestigen; **dadurch gekennzeichnet, dass** die Abdeckwand ein gewelltes Außenprofil aufweist, das Ansätze (17) bildet, wobei die Vorsprünge (17A) auf den Ansätzen (17) angeordnet sind.

## Revendications

1. Volant (1) pour une valve, comprenant :
- un corps (3) destiné à être fixé à un axe rotatif de la valve ; et
- une coiffe (11) positionnée sur le corps (3) ;
**caractérisé en ce que**
la coiffe (11) comprend une paroi de couverture sur une face supérieure (3A) du corps (3) et des prolongements (17A) s'étendant axialement depuis la paroi de couverture dans des orifices (7B) du corps (3), lesdits prolongements (17A) étant configurés pour être insérés axialement dans lesdits orifices (7B) et ainsi fixer la coiffe (11) audit corps (3) ;
**caractérisé en ce que**
le corps (3) et la paroi de couverture présentent un profil extérieur ondulé formant des bossages (7A, 17), les orifices (7B) et les prolongements (17A) étant disposés sur lesdits bossages (7A, 17).

2. Volant (1) selon la revendication 1, dans lequel chacun des prolongements (17A) présente une section transversale constante.

3. Volant (1) selon l'une des revendications 1 et 2, dans lequel chacun des prolongements (17A) est cylindrique.

4. Volant (1) selon l'une quelconque des revendications 1 à 3, dans lequel chacun des prolongements (17A) présente une extrémité distale avec une section transversale correspondant à une section transversale moyenne dudit prolongement (17A).

5. Volant (1) selon l'une quelconque des revendications 1 à 4, dans lequel chacun des prolongements (17A) présente un diamètre extérieur d'au moins 4mm et au maximum de 8mm.

6. Volant (1) selon l'une quelconque des revendications 1 à 5, dans lequel chacun des prolongements (17A) présente un orifice traversant (17B), préférentiellement chaque orifice traversant (17B) présente un diamètre d'au moins 2mm et/ou au maximum de 6mm.

7. Volant (1) selon l'une quelconque des revendications 1 à 6, dans lequel les orifices (7B) et les prolongements (17A) sont répartis à la périphérie du corps (3) et de la paroi de couverture.

8. Volant (1) selon l'une des revendications 1 à 7, dans lequel le nombre de bossages (7A, 17) est d'au moins 4 et/ou au maximum 6.

9. Volant (1) selon l'une quelconque des revendications 1 à 8, dans lequel la paroi de couverture comprend une portion annulaire tronconique (15) et une portion centrale plane (13), ladite portion annulaire tronconique (15) reposant sur une portion annulaire tronconique (7) correspondante du corps (3).

10. Volant (1) selon la revendication 9, dans lequel les prolongements (17A) s'étendent depuis la portion annulaire tronconique (15) de la paroi de couverture.

11. Volant (1) selon l'une des revendications 9 et 10, dans lequel la portion centrale plane (13) de la paroi de couverture est surélevée par rapport au corps (3).

12. Volant (1) selon l'une quelconque des revendications 1 à 11, dans lequel les prolongements (17A) sont emmanchés dans les orifices (7B).

13. Volant (1) selon l'une quelconque des revendications 1 à 12, dans lequel les prolongements (17A) s'étendent distalement au-delà des orifices (7B).

14. Volant (1) selon l'une quelconque des revendications 1 à 13, dans lequel la paroi de couverture comprend à la périphérie de ladite paroi une encoche (19) configurée pour faciliter l'insertion d'un tournevis entre ladite paroi et le corps (3) permettant le retrait de la coiffe (11).

15. Coiffe (11) destinée à être positionné sur un corps (3) configuré pour être fixé à un axe rotatif d'une valve, dans laquelle la coiffe (11) comprend une paroi de couverture destinée à reposer sur une face supérieure (3A) du corps (3), et des prolongements (17A) s'étendant axialement depuis ladite paroi, lesdits prolongements (17A) étant configurés pour être insérés axialement dans des orifices (7B) du corps (3) et ainsi fixer la coiffe (11) audit corps (3), **caractérisé en ce que** la paroi de couverture présentent un profil extérieur ondulé formant des bossages (17), les prolongements (17A) étant disposés sur lesdits bossages (17).
